(19) **Europäisches Patentamt**
**European Patent Office**
**Office européen des brevets**

(11) **EP 1 471 095 B1**

(12) **EUROPEAN PATENT SPECIFICATION**

(45) Date of publication and mention
of the grant of the patent:
**19.03.2008 Bulletin 2008/12**

(51) Int Cl.:
*C08J 5/18* (2006.01)     *C08L 67/00* (2006.01)

(21) Application number: **03701006.3**

(22) Date of filing: **06.01.2003**

(86) International application number:
**PCT/JP2003/000014**

(87) International publication number:
**WO 2003/057765 (17.07.2003 Gazette 2003/29)**

(54) **EASY-TO-TEAR STRETCHED ALIPHATIC-POLYESTER FILM**

LEICHT ZERREISSBARE FOLIE AUS ALIPHATISCHEM POLYESTER

FILM A BASE DE POLYESTER ALIPHATIQUE, EXTENSIBLE ET SE DECHIRANT FACILEMENT

(84) Designated Contracting States:
**DE FR GB**

(30) Priority: **07.01.2002 JP 2002000821**
**10.04.2002 JP 2002108199**
**22.11.2002 JP 2002339238**
**22.11.2002 JP 2002339239**
**26.12.2002 JP 2002377516**

(43) Date of publication of application:
**27.10.2004 Bulletin 2004/44**

(73) Proprietor: **Toyo Boseki Kabushiki Kaisha**
**Osaka-shi,**
**Osaka 530-8230 (JP)**

(72) Inventors:
• **KAWAHARA, Keizou**
**TOYO BOSEKI KABUSHIKI KAISHA**
**Ohtsu-shi, Shiga 520-0292 (JP)**
• **YOSHIDA, Shigeto**
**TOYO BOSEKI KABUSHIKI KAISHA**
**Ohtsu-shi, Shiga 520-0292 (JP)**
• **TSUTSUMI, Masayuki**
**TOYO BOSEKI KABUSHIKI KAISHA**
**Ohtsu-shi, Shiga 520-0292 (JP)**
• **SAKURA, Daisuke**
**TOYO BOSEKI KABUSHIKI KAISHA**
**Ohtsu-shi, Shiga 520-0292 (JP)**
• **NAGARA, Akinobu**
**TOYO BOSEKI KABUSHIKI KAISHA**
**Ohtsu-shi, Shiga 520-0292 (JP)**
• **AKITOMO, Yoshiko**
**TOYO BOSEKI KABUSHIKI KAISHA**
**Ohtsu-shi, Shiga 520-0292 (JP)**

• **TAKAHASHI, Noriko**
**TOYO BOSEKI KABUSHIKI KAISHA**
**Ohtsu-shi, Shiga 520-0292 (JP)**
• **ODA, Naonobu**
**TOYO BOSEKI KABUSHIKI KAISHA**
**Inuyama-shi, Aichi 484-8508 (JP)**
• **IMAI, Kazumoto**
**TOYO BOSEKI KABUSHIKI KAISHA**
**Inuyama-shi, Aichi 484-8508 (JP)**
• **TAKEUCHI, Kunio**
**TOYO BOSEKI KABUSHIKI KAISHA**
**Inuyama-shi, Aichi 484-8508 (JP)**
• **NAGANO, Hiroshi**
**TOYO BOSEKI KABUSHIKI KAISHA**
**Inuyama-shi, Aichi 484-8508 (JP)**
• **KOBAYASHI, Hisato**
**TOYO BOSEKI KABUSHIKI KAISHA**
**Ohtsu-shi, Shiga 520-0292 (JP)**
• **MORI, Keiji**
**TOYO BOSEKI KABUSHIKI KAISHA**
**Tokyo 103-8530 (JP)**
• **FUJITA, Yasuhisa**
**TOYO BOSEKI KABUSHIKI KAISHA**
**Osaka-shi, Osaka 530-8230 (JP)**

(74) Representative: **von Kreisler, Alek et al**
**Deichmannhaus am Dom**
**Postfach 10 22 41**
**50462 Köln (DE)**

(56) References cited:
**EP-A- 0 776 927      EP-A- 1 038 906**
**WO-A-98/12250       JP-A- 10 217 243**
**JP-A- 2000 086 749   JP-A- 2000 086 877**
**JP-A- 2001 088 264   JP-A- 2001 191 407**

## Description

## Technical Field

The present invention relates to an easily tearable biodegradable stretched aliphatic polyester film. Particularly, the present invention relates to a stretched aliphatic polyester film superior in heat resistance, biodegradability, aroma retention, water resistance and mechanical property, which has fine easy-to-tear property and twist fixability useful for a packaging film or a film for adhesive tapes.

In addition, the present invention relates to a stretched aliphatic polyester film having characteristics of a cellophane film having both antinomic characteristics of superior easy-to-tear property and superior tensile impact property, wherein defects of a cellophane film in moisture resistance and biodegradability have been improved.

Furthermore, the present invention relates to an environment corresponding type packaging bag superior in easy-to-cut property, which has characteristics of a stretched aliphatic polyester film in heat resistance, biodegradability, aroma retention, toughness and the like.

## Background Art

Conventionally, as a film having superior easy-to-tear property, a cellophane film has been known. Since cellophane film shows fine characteristics in transparency, easy-to-tear property, twist fixability and the like, it has been widely used as a packaging material of food and pharmaceutical products, a material for adhesive tapes and the like. However, cellophane film has high hygroscopicity and the characteristics of the film vary depending on the season, which makes it difficult to always provide a film having constant quality. In addition, since cellophane film requires use of large amounts of highly toxic substances during the production step thereof, such as sulfuric acid and carbon disulfide, once these flow out, a serious environmental pollution may occur.

On the other hand, packaging bags and adhesive tapes comprising a polyethylene terephthalate film as a substrate are superior in toughness, heat resistance, water resistance and transparency of the film. As packaging bags, however, they are associated with defects in that the bag is difficult to open by tearing and the bag cannot be used for twist packaging due to its inferior twist fixability, and as adhesive tapes, they are associated with defects in that the tape resists cutting by hand or a dispenser, and the like.

As a method for solving the above-mentioned defects, there have been proposed a monoaxially oriented polyester film (JP-B-55-8551), a film wherein diethylene glycol component and the like are copolymerized (JP-B-56-50692), a film obtained from a low molecular weight polyester resin (JP-B-55-20514) and the like.

In the above-mentioned conventional techniques, however, a method comprising monoaxial orientation permits easy linear cutting in the orientation direction but otherwise in the directions other than the orientation direction. In addition, a method comprising copolymerization of large amounts of diethylene glycol component and the like is defective in that the copolymerization impairs toughness and heat resistance that polyethylene terephthalate originally has. Furthermore, a method using a low molecular weight polyester resin is not practical because problems such as breakage in the drawing step easily occur.

In JP-A-5-104618, in contrast, a film having fine tearing performance and twist fixability while maintaining characteristics such as heat resistance, aroma retention, water resistance and toughness has been obtained by employing a multi-layer constitution of a polyester film consisting of polyester resins having different melting points and controlling the temperature of the heat treatment during the production step. Moreover, problem of breakage has been reduced during the drawing step. However, even this film does not show entirely sufficient tearing performance and twist fixability. In addition, the burden on the environment has not been considered due to the absence of biodegradability.

In the meantime, a film superior in tearing-by-hand performance, i.e., tearability, which is made from a polystyrene polymer having a syndiotactic structure, wherein the defects of the aforementioned cellophane film in moisture resistance and the like have been improved, is drawing attention, and, for example, JP-A-5-33809, JP-A-2000-25835, JP-A-2002-240209 and the like propose various packaging bags made of a film produced using the polystyrene polymer having the syndiotactic structure.

Certainly, the film obtained by the aforementioned known method shows improved easy-to-tear property, which is one of the characteristics that a cellophane film has, and is of a practical level. However, tensile impact strength, which is the other characteristic, has not been improved, and the development of the film in the field requiring impact resistance has not been attainable.

JP-A-2001-191407 discloses an easy-to-tear stretched aliphatic polyester film. The edge tear strength exemplified is 31-105 N.

EP-A-1038906 discloses an aliphatic polyester film, with improved hand tearability. Said film is biaxially stretched, and its refractive index can be set to fall within a certain range by controlling the stretching process.

EP-A-0776927 discloses an aliphatic polyester film with good stretching properties.

JP-A-2000-086749 and JP-A-2000-086877 disclose the treatment of polylactic acid films with actinic radiation, to improve several properties of said films.

WO-A-98/12250 discloses the exposition to actinic radiation to improve the properties of polylactic acid films.

In view of the serious problems of waste in recent years, moreover, prevailing of packaging materials and adhesive tape materials associated with a smaller environmental burden has been desired. To be precise, when polyesters such as polyethylene terephthalate and the like are wasted by landfill in the form of a film or a sheet, they remain under natural environment and cause environmental pollution because they resist corrosion and decomposition. Even when they are incinerated, the incinerator may be undesirably damaged and toxic gas may be undesirably generated due to the high calorific power of the materials themselves, or laminate materials and additives.

To deal with such problems, development of a biodegradable material to be decomposed by microorganisms present in nature has been ongoing. Particularly, a lactic acid-based polyester film is superior in heat resistance, aroma retention, transparency, toughness and form-processability, and exploitation of use in a wide range is being realized, as, for example, packaging materials, adhesive tape materials, containers, electronic parts-related materials and the like. However, due to its easy-to-tear performance, which is not superior, when this film is used as a packaging bag, the bag shows problematically inferior easy-to-cut property.

**Brief Description of the Drawings**

Fig. 1 is a schematic view showing the shape of a sample for tear energy measurement.
Fig. 2 is a schematic view showing the maximum strength and the elongation at the point of the maximum strength, on the S-S curve obtained in the tear energy measurement.

**Disclosure of the Invention**

An object of the present invention is to provide an environment corresponding type film, having easy-to-tear property, twist fixability and transparency, which are characteristics of a cellophane film, as well as heat resistance, biodegradability, aroma retention, toughness and the like, which are characteristics of a stretched aliphatic polyester film, in combination.

Another object of the present invention is to provide an environment corresponding type biodegradable film having both the antinomic characteristics of a cellophane film: superior easy-to-tear performance and superior tensile impact property, wherein moisture resistance, which is a defect of the cellophane film, has been improved.

In addition, another object of the present invention is to provide an environment corresponding type packaging bag having easy-to-cut property, as well as biodegradability, heat resistance, aroma retention, toughness and the like in combination.

The present inventors have conducted intensive studies in an attempt to achieve the above-mentioned objects and found that an easy-to-tear film can be obtained by, for example, irradiation of actinic rays on a stretched aliphatic polyester film, thereby setting an edge tear strength of the film in the longitudinal direction and the transverse direction to 2 to 22 N.

It has been also found that a film having both the antinomic characteristics of a cellophane film of superior easy-to-tear performance and superior tensile impact property can be obtained by, for example, irradiation of actinic rays on a stretched aliphatic polyester film containing a flexible polyester resin to afford a film having particular tear energy and tensile impact strength.

Furthermore, as a production method of the aforementioned easy-to-tear film, a method of laminating aliphatic polyesters having different melting points in three layers of A/B/A under particular film-forming conditions.

Accordingly, the present invention provides the following (1) to (8):

(1) An easy-to-tear stretched aliphatic polyester film having an edge tear strength in the longitudinal direction and the transverse direction of 2 to 22 N, which is produced by irradiation of actinic rays on a stretched aliphatic polyester film,

(2) the easy-to-tear stretched aliphatic polyester film of (1), having a molecular absorption coefficient at a wavelength of 205 nm of not less than 1500,

(3) an easy-to-tear stretched aliphatic polyester film having a tear energy of 0.2-5 gf·mm/$\mu$m, and a tensile impact strength of not less than 0.5 j/mm$^2$, which is produced by irradiation of actinic rays on a stretched aliphatic polyester film,

(4) the easy-to-tear stretched aliphatic polyester film of any one of (1) to (3), wherein a main component of the stretched aliphatic polyester film is a lactic acid-based polyester resin,

(5) an easy-to-cut packaging bag produced using a film obtained by irradiation of actinic rays on an aliphatic polyester film,

(6) an easy-to-cut packaging bag obtained by irradiation of actinic rays on a packaging bag produced using an aliphatic polyester film,

(7) the easy-to-cut bag of any one of (5) and (6), wherein a main component of the stretched aliphatic polyester film is a lactic acid-based polyester resin,

(8) a production method of an easy-to-tear lactic acid-based polyester film having an edge tear strength in the longitudinal direction and the transverse direction of 2-22 N, which method comprises stretching, in at least a monoaxial direction, a non-stretched laminate film comprising a lactic acid-based polyester resin layer (A) having a melting point: $Tm_A$ and a resin (B) having a melting point: $Tm_B$, which satisfies $Tm_B \geq Tm_A + 10°C$, relative to $Tm_A$, said resin (B) being laminated on at least one surface of layer (A) in a thickness of 5-60% of the thickness of a whole film, and then performing a heat treatment at a temperature Ts satisfying $Tm_A - 10°C \leq Ts < Tm_B + 10°C$.

The present invention is explained in more detail in the following.

As the aliphatic polyester resin, which is a starting material resin of the main component of the easy-to-tear stretched aliphatic polyester films of (1)-(8) of the present invention, for example, aliphatic polyester resins such as polybutylene succinate, polyhydroxybutyrate, polylactic acid and the like obtained from aliphatic dicarboxylic acid and aliphatic diol, or aliphatic hydroxycarboxylic acid or aliphatic lactide can be mentioned. These aliphatic polyester resins may be copolymerized. It is also possible to mix these resins with a resin compatible or incompatible with these resins. Particularly, a film comprising a lactic acid-based polyester resin as a main component is preferable, because a film that satisfies the characteristics of the present invention can be easily obtained and the film is superior in heat resistance, aroma retention, transparency, toughness and form-processability.

As the aforementioned lactic acid-based polyester resin, L-lactic acid polymer, D-lactic acid polymer, a blend thereof, a copolymer thereof, a copolymer thereof with polyhydroxybutyrate and the like, a mixture with other resin and the like can be mentioned.

The molecular weight of the aforementioned aliphatic polyester resin in the case of a lactic acid-based polyester resin, for example, is preferably not less than 10000 to not more than 500000, particularly preferably not less than 30000 to not more than 300000, in a weight average molecular weight. When the weight average molecular weight is less than 10000, stable extrusion and casting is difficult to perform and when it exceeds 500000, melt extrusion tends to become difficult due to an increased pressure in an extruder.

As long as the effect of the present invention is not inhibited, various known additives such as lubricant, pigment, thermal stabilizer, antioxidant, antistatic agent, impact resistance improving agent and the like may be added to the easy-to-tear stretched aliphatic polyester film of the present invention.

The easy-to-tear stretched aliphatic polyester film of the present invention (1) needs to have an edge tear strength of not more than 22 N in the longitudinal direction and the transverse direction. The edge tear strength is more preferably not more than 20 N and particularly preferably not more than 18 N. When the edge tear strength exceeds 22 N, easy-to-tear property and twist fixability become unpreferably degraded. When the edge tear strength is too small, breakage may occur during a film processing step and the like, and therefore, the edge tear strength is not less than 2 N.

The easy-to-tear stretched aliphatic polyester film of the present invention (2) has a molecular absorption coefficient of not less than 1500 at a wavelength of 205 nm. For this film, for example, a method comprising chemical modification of aliphatic polyester by photochemical reaction by ultraviolet irradiation of aliphatic polyester film can be mentioned. While the molecular absorption coefficient at a wavelength 205 nm of the aliphatic polyester film obtained by conventional film-forming is less than 1500, the molar molecular absorption coefficient can be increased to not less than 1500 by chemical modification, thereby allowing a film to express easy-to-tear property and twist fixability.

The easy-to-tear stretched aliphatic polyester film of the present invention (3) has a tear energy of 0.2-5 gf·mm/$\mu$m and a tensile impact strength of not less than 0.5 j/mm$^2$. Preferably, the tear energy is 0.2-4 gf·mm/$\mu$m and the tensile impact strength is not less than 0.55 j/mm$^2$. The tear energy is an index of the tearability of the film and the tensile impact strength is the strength of the film upon impact on the film. When the tear energy is less than 0.2 gf·mm/$\mu$m, the energy is too low and the film can be torn with a weak force, which is not preferable. Conversely, when it exceeds 5 gf·mm/$\mu$m, the tear energy becomes too high and the tearability is degraded, which in turn unpreferably degrades, for example, tearing-by-hand performance and the like. On the other hand, when the tensile impact strength is less than 0.55 j/mm$^2$, the tensile impact strength becomes insufficient to allow breakage of film upon weak impact. Therefore, by meeting the aforementioned characteristics, the antinomic characteristics of superior tearing-by-hand performance and superior impact resistance of a cellophane film can be imparted and the film can be preferably used in the field of packaging and the like.

One production method of the easy-to-tear stretched aliphatic polyester films of the present invention (1)-(3) is, for example, irradiation of actinic rays on an aliphatic polyester film.

In another production method of the easy-to-tear stretched aliphatic polyester films of the present invention (1)-(3), irradiation of actinic rays is not essential and the film is produced by, for example, laminating aliphatic polyesters having different melting points in three layers of A/B/A under particular film-forming conditions, as described in (8).

The production of the films of the present invention (1)-(3) by irradiation of actinic rays is explained further.

In this case, the film-forming method of the stretched aliphatic polyester film before actinic ray irradiation is not limited and may be any method. For example, an aliphatic polyester resin is melted in an extruder and the like at a temperature of not less than the melting point and extruded from a die outlet to give a non-stretched film. This non-stretched film is further subjected to monoaxial stretching or biaxial stretching and, where necessary, a heat-set treatment. Particularly, a biaxially stretched film is preferable because it shows less degree of uneven thickness and a film having a uniform tear direction can be easily obtained.

The stretched polyester film before actinic ray irradiation may be a single layer film or a laminate film, and when it is a laminate film, for example, a non-stretched film can be obtained by a method comprising separately melting resins in plural extruders at a temperature not less than the melting point, extruding them from a die outlet and laminating the formed non-stretched films with heating, a method comprising melt-laminating a molten film on the surface of a different non-stretched film, a method comprising laminating resins in a molten state in a feed block or a die by coextrusion methods, extruding same from a die outlet and cool-solidifying the laminate and the like. The die may be either a flat die or a cyclic die.

The obtained single-layer or multi-layer non-stretched film is subjected to monoaxial stretching or biaxial stretching at a temperature not more than the melting point of the aliphatic polyester resin. In the case of a lactic acid-based polyester resin, for example, the film is stretched at 40°C-170°C. The draw ratio is at least not less than 1.5, preferably 3 to 5 for the monoaxial stretching, and not less than 10, preferably not less than 16, in area ratios for the biaxial stretching. When the draw ratio is low, tearing performance and the degree of uneven thickness of the stretched film become degraded. When the draw ratio is too high, problems occur in that the directional property of tearing becomes intense and incident of breakage increases during production, thus degrading productivity. In the case of biaxial stretching, moreover, any of sequential stretching methods and simultaneous stretching methods can be used. The stretching method may be any of roll stretching methods, tenter stretching methods and inflation methods.

The stretched aliphatic polyester film of the present invention is preferably subjected to a heat treatment after stretching to impart easy-to-tear property. For example, the heat treatment is conducted at a temperature of 0-50°C lower than the melting point of the aliphatic polyester resin. In the case of a lactic acid-based polyester resin, for example, the heat treatment is preferably conducted at 130°C-170°C. When the temperature of the heat treatment is too low, the molecular orientation cannot be broken and a film having fine tearability may not be obtained. When the temperature of the heat treatment is too high, the film gets perforated and breakage occurs often, thus making the film-forming difficult. When a heat-relaxation treatment is applied after the heat-set treatment, thermal dimensional stability is improved preferably.

The easy-to-tear property and twist fixability can be improved by selecting suitable drawing conditions, heat treatment conditions and laminate thickness constitution. Such methods can be employed without any limitation.

The film of the present invention (3) can be obtained by, for example, actinic ray treatment of an aliphatic polyester film obtained in the same manner as above by adding a polyester elastomer or a flexible polyester polymer such as flexible aliphatic polyester polymer and the like to the aforementioned starting material aliphatic polyester resin in a proportion of 3-30 parts by weight relative to 100 parts by weight of the aliphatic polyester resin. It is also preferable to set the draw ratio lower for the production of the film. As the aforementioned flexible polyester polymer for modification, use of an aliphatic polyester polymer is a more preferable embodiment from the aspect of biodegradability.

To obtain an easy-to-tear stretched aliphatic polyester film, actinic rays are irradiated on the aliphatic polyester film obtained by the aforementioned method. The kind of the actinic rays is not particularly limited as long as it has energy capable of chemical modification of the structure of the aliphatic polyester. For example, ultraviolet ray, electron beam, γ-ray, X-ray and the like can be mentioned. As the source of the ultraviolet ray, one having an emission wavelength in the absorption wavelength region of the stretched aliphatic polyester film is preferable. For example, an artificial light source such as a low pressure mercury lamp, a high pressure mercury lamp, a chemical lamp, a xenon lamp, a zirconium lamp, a carbon arc lamp, a germicidal lamp and the like can be mentioned, but the source is not limited thereto. A natural light such as sunlight is not practical because its illuminance is low.

A method of the aforementioned irradiation treatment using actinic rays may be an inline treatment during film-forming or a batch treatment after film-forming, or further, the treatment may be applied after processing into a packaging bag and the like, wherein the method is not limited.

The easy-to-tear stretched aliphatic polyester films of the present invention (1)-(3) may be subjected to surface processing to improve adhesiveness, printability and the like by a known coating method, during a film-forming step. In addition, surface processing such as a corona treatment, a plasma treatment, a flame treatment and the like may be applied to improve the wettability and adhesiveness of the surface of the aliphatic polyester film.

The easy-to-tear stretched aliphatic polyester films of the present invention (1)-(3) as packaging materials can be made to have heat seal property by laminating a resin layer having heat seal property by known methods such as dry lamination, extrusion lamination and the like. In this case, various biodegradable resin layers are preferably laminated from the viewpoint of biodegradability.

The films of the present invention (1)-(3) can be preferably used as easy-to-cut packaging bags.

The present invention (5) and (6) relates to an easy-to-cut packaging bag. The present invention (5) is an easy-to-cut packaging bag produced from a film obtained by irradiation of actinic rays on an aliphatic polyester film, and the present invention (6) is an easy-to-cut packaging bag obtained by irradiation of actinic rays on a packaging bag produced using an aliphatic polyester film.

The sealing method of the easy-to-cut packaging bags of the present invention (5) and (6) is not limited and may be any, but a heat sealing method can be mentioned as a preferable method. When the heat sealing method is practiced, a method comprising laminating the aforementioned aliphatic polyester film on a resin layer having heat seal property and imparting the heat seal property thereto is a preferable embodiment. While the lamination method is not limited, known methods such as dry lamination, extrusion lamination and the like are preferably employed. In these methods, the kind of resin layer having heat seal property is not limited, but the layer preferably consists of a degradable resin. Particularly from the viewpoint of biodegradability, lamination of various biodegradable resin layers is most preferable. In other words, it is preferable to use a film made from a resin having a melting point or softening point lower than that of the aforementioned aliphatic polyester film. The use of a non-stretched film is particularly preferable.

The bag-making method is not limited and may be any, and, for example, a packaging bag manufactured by a three-side-sealed bag forming machine or a center sealed bag forming machine can be mentioned. In addition, it may be a packaging bag produced simultaneously with filling using an automatic filling machine.

The packaging bags obtained by the present invention (S) and (7) have easy-to-cut property and an auxiliary means to impart the easy-to-cut property is not necessarily required. Depending on the demand in the market, however, a notch may be formed, or perforation and the like may be performed without restriction, thereby to form an auxiliary means to improve tearing-by-hand performance.

In the present invention (6), the actinic ray treatment to impart easy-to-cut property is applied to a produced packaging bag. Therefore, the aliphatic polyester film can go through the film-forming step and the bag making step prior to this treatment, in the state of a tough film before imparting the easy-to-cut property. As a result, these steps can be characteristically performed without lowering the operability.

Now, the case where the films of the present invention (1)-(3) are produced without irradiation of actinic rays, or a method of producing a film of the present invention (8), wherein aliphatic polyesters having different melting points are laminated in three layers of A/B/A under particular film-forming conditions is explained.

The aforementioned lactic acid-based polyester can be used for the lactic acid-based polyester resin layer (A) and (B) of the present invention (8). Here, the polyester used for lactic acid-based polyester resin layer (A) has a melting point of not less than 10°C lower, preferably not less than 20°C lower, than the melting point of the polyester used for the lactic acid-based polyester resin layer (B). As a method of controlling the melting points of the lactic acid-based polyester resin layer (A) and (B), for example, a method comprising changing the D-lactic acid ratio of the lactic acid polymer, a method comprising changing the hydroxycarboxylic acid component ratio and the like can be mentioned.

The weight average molecular weight of the polyester of the lactic acid-based polyester resin layers (A) and (B) is each preferably not less than 50000 and not more than 500000, particularly preferably not less than 80000 and not more than 300000. When the weight average molecular weight is less than 50000, film-forming tends to become unstable when a starting material is melt-extruded and performing casting, and when it exceeds 500000, melt extrusion tends to be difficult due to the increased pressure in an extruder.

The polyester of the lactic acid-based polyester resin layers (A) and (B) of the present invention may contain various known additives such as lubricant, pigment, thermal stabilizer, antioxidant, antistatic agent, impact resistance improving agent and the like, as long as the effect of the present invention is not inhibited.

The thickness of the lactic acid-based polyester resin layer (B) is not less than 5%, not more than 60%, and preferably 15% to 50%, of the thickness of the entire film. When the thickness of the lactic acid-based polyester resin layer (B) is less than 5% of the thickness of the entire film, the strength of the obtained film becomes insufficient, causing practical inconvenience. When the thickness of the lactic acid-based polyester resin layer (B) exceeds 60% of the entire thickness, sufficient tearability and twist property cannot be achieved unpreferably. The constitution of the lactic acid-based polyester resin layer (A) and the lactic acid-based polyester resin layer (B) may be a three-layer (B/A/B, A/B/A) or two-layer (B/A) construction. While the thickness of the stretched film is not particularly limited, 12 $\mu$m - 30 $\mu$m is preferable for use as a packaging bag, an adhesive tape and the like.

The production method of the non-stretched laminate film in the present invention (8) may be any of the following. (1) a method comprising separately melting resins in plural extruders and the like at a temperature not less than the melting point, extruding them from a die outlet and laminating the formed non-stretched films with heating, (2) a method comprising melt-laminating a molten film on the surface of a different non-stretched film, (3) a method according to a coextrusion method, which comprises laminating resins in a molten state in a feed block or a die, extruding same from a die outlet and cool-solidifying the laminate and the like.

The extrusion temperature is preferably in the range of $Tm_B$-$(Tm_B+70°C)$, particularly preferably in the range of $(Tm_B+20°C)$-$(Tm_B+50°C)$, relative to the melting point: $Tm_B$ of polyester (B) having higher melting point. When the extrusion temperature is less than $Tm_B$, the extrusion tends to be difficult due to the increased pressure in an extruder. In contrast, when it exceeds $(Tm_B+70°C)$, thermal decomposition of the lactic acid-based polyester resin unpreferably proceeds. The die of the extruder used in the present invention may be cyclic or may have a linear slit.

The thus-obtained non-stretched laminate film is subjected to monoaxial stretching or biaxial stretching at a temperature which is higher than the higher of the glass transition points of the lactic acid-based polyester resin (A) and the lactic acid-based polyester resin (B), and not higher than the melting point $Tm_A$ of the polyester resin (A). The draw ratio in the case of monoaxial stretching is at least not less than 1.5, preferably 3 to 7, and in the case of biaxial stretching, 1.5 to 10 in each direction and not less than 10, preferably not less than 16, in area ratio. In the case of biaxial stretching, any of sequential biaxially stretching methods and simultaneous biaxially stretching methods may be used.

As the stretching machine in the present invention, for example, an inflation film-forming machine, a roll stretching machine, a tenter stretching machine (transversely stretching type, pantographic simultaneous biaxially stretching type, linear motor driven simultaneous biaxially stretching type) and the like can be mentioned.

In the present invention, it is important that a heat treatment should be applied to a stretched film at a temperature Ts satisfying $Tm_A$-$10°C<Ts<Tm_B$+$10°C$, more preferably a temperature satisfying $Tm_A≤Ts<Tm_B$, for 2 seconds to 30 seconds, more preferably 5 seconds to 15 seconds. While the heat treatment can be applied at a fixed width, it can be also applied with relaxation or under tension. When the temperature of the heat treatment is $Ts<Tm_A$-$10°C$, the molecular orientation of the lactic acid-based polyester resin layer (A) cannot be broken, and fine tearability and fine twist fixability cannot be obtained. When the temperature of the heat treatment is $Ts>Tm_B$+$10°C$, the film may have holes, or film itself may be melted to make the film-forming difficult. In other words, heat treatment operation at a suitable temperature and control of the thickness of the constitution enable balancing between a layer having disintegrated molecular orientation that affords tearability and twist property, and a layer maintaining molecular orientation that affords heat resistance and toughness that are the characteristics a stretched lactic acid-based polyester film originally has, whereby the conflicting properties can be simultaneously maintained.

In the present invention (8), therefore, a non-stretched laminate film comprising lactic acid-based polyester layers (A) and (B) having different melting points is stretched in at least one direction and a heat treatment is applied at a temperature not lower than [10°C lower than the melting point: $Tm_A$ of polyester (A) having a low melting point] and lower than [10°C higher than the melting point $Tm_B$ of polyester (B) having a high melting point], whereby the following characteristics can be imparted to each layer.

The polyester (A) layer gets brittle by disintegration of orientation during a drawing step, and has tearability and twist fixability.

The polyester (B) layer maintains orientation and has heat resistance and the like that a lactic acid-based polyester film originally has.

In other words, due to the two kinds of different characteristics of the laminate film, a lactic acid-based polyester film having superior characteristics that a lactic acid-based polyester film originally has, while showing fine easy-to-tear property and easy twist fixability, can be obtained.

In the present invention (8), moreover, surface processing may be performed in a production step by known coating methods for the purpose of improving adhesiveness and printability. Further, for the purpose of increasing surface energy, surface processing such as a corona treatment, a plasma treatment, a flame treatment and the like may be conducted during the production step or after the production.

**Best Mode For Embodying The Invention**

Examples

The present invention is explained in detail by referring to Examples, which are not to be construed as limitative. The properties shown in Examples were measured and evaluated by the following methods.

(1) Melting point:

Using DSC3100S manufactured by MAC Science Co., Ltd., a sample (10 mg) was placed in a pan and melted at 220°C for 10 min. After rapid cooling, an endothermic peak by melting was measured from room temperature to 220°C at a temperature rise rate of 10°C/min and the peak temperature was taken as the melting point.

(2) Weight average molecular weight

A solution of polystyrene (manufactured by TOSOH CORPORATION) was prepared as a standard substance and a GPC calibration curve was plotted. For the measurement by RI detection, GPC (Shodex-System-21 manufactured by SHOWA DENKO K.K.) was used, columns (GMH×1, GMH×1, G2000H×1 (manufactured by TOSOH CORPORATION) were serially connected and used, as a developing solvent, chloroform was used at a column temperature of 40˚C. The data was processed using SIC-480, manufactured by System Instruments CO., LTD., to calculate the weight average molecular weight.

(3) Molecular absorption coefficient

The molecular absorption coefficient is a coefficient specific to a substance, as described in Physical and Chemical Dictionary (Iwanami Shoten, 3rd ed. enlarged ed. page 1350, molar absorption coefficient). The ultraviolet absorption spectrum of the film having a thickness of about 5 $\mu$m, which was cast by the following method, was measured by recording spectrophotometer U-3500 (manufactured by Hitachi, Ltd.) and the coefficient was calculated from absorbance A at wavelength 205 nm by Lambert-Beer formula (measurement condition: scan speed; 60 mm/min, sampling interval; 0.1 nm).

Molecular absorption coefficient $\varepsilon = A/b \cdot c$

A: absorbance (-), b: film thickness (cm), c: molar concentration was 1.

Casting method of measurement film: A sample was dissolved in chloroform at a concentration of 10% and the obtained solution was dropped on a fluorine resin-treated surface of a substrate comprising a fluorine resin-treated aluminum foil laminated on a glass plate, applied with a 50 $\mu$m gap squeegee and dried at room temperature for 10 min. The dried film was peeled off and vacuum dried at 50˚C for 2 hr to give a measurement film.

(4) Edge tear strength

Measured in accordance with JIS C2318-1975. A smaller value means easier tearing.

(5) Easy-to-tear property

A functional evaluation was performed. A 15 mm wide sample tape was cut out in both the longitudinal and transverse directions and the sample in each direction was torn by hand. A tape that was torn easily was evaluated as ⊙, a tape that was torn easily, though in a somewhat inferior manner, was evaluated as ○, a tape that was not torn easily was evaluated as ∆ and a tape that could not be torn by hand was evaluated as ×.

(6) Twist fixability

A functional evaluation was performed. A 30 mm wide sample tape was twisted by hand, and a tape that kept the twisted state and failed to restore to the original state was evaluated as ○ and a tape that failed to maintain the twisted state was evaluated as ×.

(7) Tear energy

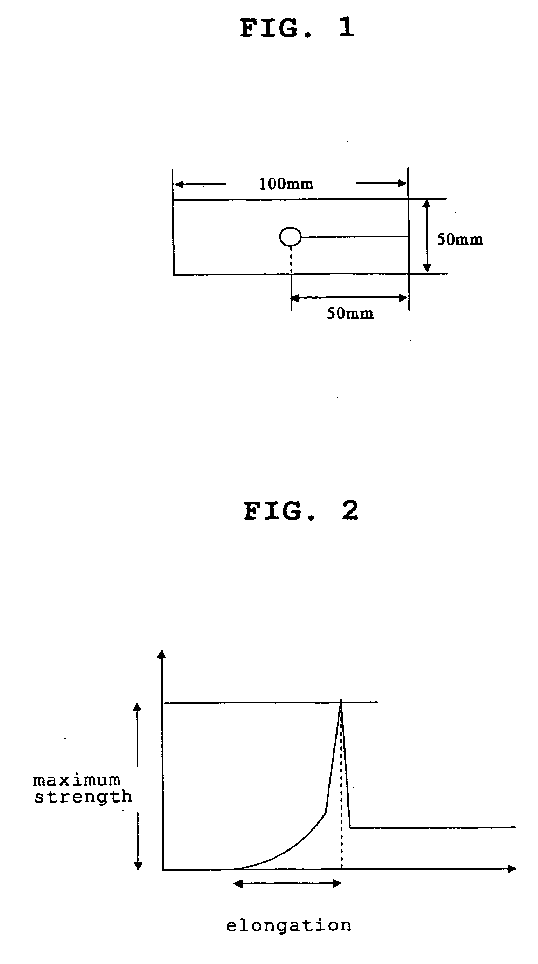

A sample having a size of 100 mmx50 mm was cut out in such a manner that the longitudinal direction of the film and the longitudinal direction of the sample matched. A 50 mm long notch was created at the center of the sample on a minor axis side in parallel with the longitudinal direction from an end. At the end point of this notch, a 4 mm diameter hole about the notch was made with a punch. The shape of this sample is shown in Fig. 1. Using said sample, a tear test was performed in accordance with Trouser method, JIS-K7128. The maximum strength (gf) and the elongation (mm) showing the maximum strength were determined from the obtained S-S curve, and the product of the two divided by the film thickness ($\mu$m) was taken as a tear energy. A schematic view of the S-S curve obtained by this measurement is shown in Fig. 2. The measurement was conducted seven times, and the tear energy was expressed with an average value of five measured values excluding the maximum value and the minimum value.

The tear test was performed under the following conditions.

Measurement apparatus: Autograph AG5000A manufactured by SHIMADZU CORPORATION
Tension speed: 200 mm/min
Chart speed: 200 mm/min

(8) Tensile impact strength

A sample having a size of 100 mm in the longitudinal direction and 10 mm in the transverse direction was cut out from a film to prepare a measurement sample. The measurement was conducted using UNIVERSAL IMPACT TESTER manufactured by Toyo Seiki Seisaku-sho, LTD. and according to the following method. One of the measurement samples was set on a cross head and the other on a hammer, and the arm was shaken down from a lifting angle 135 (degrees) (full scale of swing at the air: 10 kgf). The angle of the position where a pointer stopped was read. From this angle and the following formula, tensile impact strength (K) was calculated. The measurement was conducted eight times for each sample, and the tensile impact strength was expressed with an average value of six measured values excluding the maximum value and the minimum value.

$$K=E×9.807×10^{-2}/(T×W)$$

K; tensile impact strength (J/mm$^2$)
E=0.7071×WR+WRcosβ
T; sample thickness (mm)
W; sample width (mm)
E; work (kgf×cm)
WR; 5.8579 (kgf×cm)
β; measured angle (degrees)

(9) Easy-to-cut property of packaging bag

A functional evaluation was performed. A packaging bag produced by heat sealing by three-side sealing method was cut by hand in the longitudinal and the transverse directions from the sealed part. A bag that was torn easily by hand was evaluated as ⊙, a bag that was torn easily, though in a somewhat inferior manner, was evaluated as ○, a bag that was not torn easily by hand was evaluated as Δ and a bag that could not be torn by hand was evaluated as ×.

(Example (1)-1)

An L-lactic acid-based copolymer having a melting point of 175˚C and a weight average molecular weight of 170000 was melted in a twin-screw extruder (screw diameter =35φ, L/D=45: TEM manufactured by TOSHIBA MACHINE CO., LTD.) and extruded from a T-die at 200˚C to give a non-stretched film.
This non-stretched film was first stretched 3.4 times in the longitudinal direction at 75˚C by a roll stretching machine and then 5.5 times in the transverse direction at 85˚C by a tenter stretching machine, after which it was subjected to a heat-set treatment at 155˚C and a 3% relaxation treatment in temperature descending process, whereby a 25 μm film was obtained. This film-forming was free of any problem such as breakage and the productivity was fine.
This film was subjected to an ultraviolet irradiation treatment for 3 min. using an ultraviolet irradiation treatment apparatus with a germicide lamp (germicide lamp GL20-A manufactured by TOSHIBA CORPORATION) attached to an exposure machine (JEA2SS manufactured by NIHON DENSHI SEIKI CO., LTD.). The film after the ultraviolet irradiation treatment was subjected to a functional test for easy-to-tear property and twist fixability. The film after the ultraviolet irradiation treatment showed fine easy-to-tear property in every direction. In addition, twist fixability was fine.

(Example (1)-2)

By the same method as used in Example (1)-1 except that the ultraviolet irradiation treatment was applied for 10 min., a stretched film was obtained, and then an ultraviolet irradiation-treated film was obtained. The film after the ultraviolet irradiation treatment showed fine easy-to-tear performance in any direction. In addition, twist fixability was fine.

(Example (1)-3)

By the same method as used in Example (1)-1 except that the ultraviolet irradiation treatment was applied for 20 min., a stretched film was obtained, and then an ultraviolet irradiation-treated film was obtained. The film after the ultraviolet irradiation treatment showed fine easy-to-tear performance in any direction. In addition, twist fixability was fine.

(Examples (1)-4 and (1)-5)

In the method of Example (1)-1, stretched aliphatic polyester films obtained by the same method as used in Example (1)-1 were introduced into an electron beam irradiation device without ultraviolet irradiation, and an electron beam (15 and 20 Mrad energy, respectively) was irradiated at 200 KV, whereby easy-to-tear stretched aliphatic polyester films of Examples (1)-4 and (1)-5 were obtained. The films obtained in these Examples showed easy-to-tear performance in any direction. In addition, twist fixability was fine.

(Comparative Example (1)-1)

The film prior to the ultraviolet irradiation treatment in Example (1)-1 was subjected to a functional test for easy-to-tear property and twist fixability. Tearing in the transverse direction was more difficult than a cellophane film, and cutting in the longitudinal direction was not attainable. When the film was twisted, the twisted state could not be maintained.

The evaluation results of the films obtained in Examples and Comparative Example are shown in Table 1.

Table 1

|  |  | Ex. (1)-1 | Ex. (1)-2 | Ex. (1)-3 | Ex. (1)-4 | Ex. (1)-5 | Comp. Ex. (1)-1 |
|---|---|---|---|---|---|---|---|
| film thickness | μm | 25 | 25 | 25 | 25 | 25 | 25 |
| melting point | ˚C | 175 | 175 | 175 | 175 | 175 | 175 |
| heat treatment temperature | ˚C | 155 | 155 | 155 | 155 | 155 | 155 |
| UV irradiation time | min. | 3 | 10 | 20 | - | - | untreated |
| electron beam irradiation energy | Mrad | - | - | - | 15 | 20 | untreated |
| edge tear strength | N | 15 | 10 | 5 | 13 | 7 | 55 |
| easy-to-tear property (transverse) | - | ○ | ⊙ | ⊙ | ○ | ⊙ | Δ |
| easy-to-tear property (longitudinal) | - | ○ | ⊙ | ⊙ | ○ | ⊙ | × |
| twist fixability | - | ○ | ⊙ | ⊙ | ○ | ⊙ | × |

(Example (2) -1)

An L-lactic acid-based copolymer having a melting point of 175˚C and a weight average molecular weight of 170000 was melted in a twin-screw extruder (screw diameter =35φ, L/D=45: TEM manufactured by TOSHIBA MACHINE CO., LTD.) and extruded from a T-die at 200˚C to give a non-stretched film.

This non-stretched laminate film was first stretched 3.4 times in the longitudinal direction at 75˚C by a roll stretching machine and then 5.5 times in the transverse direction at 85˚C by a tenter stretching machine, after which it was subjected to a heat-set treatment at 155˚C and a 3% relaxation treatment in a temperature descending process, whereby a 25 μm film was obtained. This film-forming was free of any problem such as breakage and the productivity was fine.

This film was subjected to an ultraviolet irradiation treatment for 5 min using an ultraviolet irradiation treatment apparatus with a germicide lamp (germicide lamp GL20-A manufactured by TOSHIBA CORPORATION) attached to an exposure machine (JEA2SS manufactured by NIHON DENSHI SEIKI CO., LTD.). The film after the ultraviolet irradiation treatment was subjected to a functional test for easy-to-tear property and twist fixability. The film after the ultraviolet irradiation treatment showed fine easy-to-tear property in any direction. In addition, twist fixability was fine.

(Example (2)-2)

By the same method as used in Example (2)-1 except that the ultraviolet irradiation treatment was applied for 10 min., a stretched film was obtained, and then an ultraviolet irradiation-treated film was obtained. The film after the ultraviolet irradiation treatment showed fine easy-to-tear performance in any direction. In addition, twist fixability was fine.

(Example (2)-3)

By the same method as used in Example (2)-1 except that the ultraviolet irradiation treatment was applied for 20 min., a stretched film was obtained, and then an ultraviolet irradiation-treated film was obtained. The film after the ultraviolet irradiation treatment showed fine easy-to-tear performance in any direction. In addition, twist fixability was fine.

(Comparative Example (2)-1)

The film prior to the ultraviolet irradiation treatment in Example (2)-1 was subjected to a functional test for easy-to-tear property and twist fixability. Tearing in the transverse direction was more difficult than a cellophane film, and cutting in the longitudinal direction was not attainable. When the film was twisted, the twisted state could not be maintained.
The evaluation results of the films obtained in the Examples and the Comparative Example are shown in Table 2.

Table 2

|  |  | Ex. (2)-1 | Ex. (2)-2 | Ex. (2)-3 | Comp. Ex. (2)-1 |
|---|---|---|---|---|---|
| film thickness | μm | 25 | 25 | 25 | 25 |
| melting point | ˚C | 175 | 175 | 175 | 175 |
| heat treatment temperature | ˚C | 155 | 155 | 155 | 155 |
| UV irradiation time | min. | 5 | 10 | 20 | untreated |
| molecular absorption coefficient at 205 nm | - | 1650 | 1850 | 2050 | 1450 |
| edge tear strength | N | 15 | 10 | 5 | 55 |
| easy-to-tear property (transverse) | - | ○ | ⊙ | ⊙ | Δ |
| easy-to-tear property (longitudinal) | - | ○ | ⊙ | ⊙ | × |
| twist fixability | - | ○ | ⊙ | ⊙ | × |

(Example (3)-1)

A blend comprising a copolymerized polyester polymer of succinic acid/butanediol/polycaprolactone in a proportion of 15 parts by weight relative to 100 parts by weight of an L-lactic acid-based copolymer having a melting point of 175˚C and a weight average molecular weight of 170000 was melted in a twin-screw extruder (screw diameter =35φ, L/D=45: TEM manufactured by TOSHIBA MACHINE CO., LTD.) and extruded from a T-die at 200˚C to give a non-stretched film. This non-stretched film was first stretched 3.0 times in the longitudinal direction at 75˚C by a roll stretching machine and then 5.0 times in the transverse direction at 85˚C by a tenter stretching machine, after which it was subjected to a heat-set treatment at 155˚C and a 3% relaxation treatment in a temperature descending process, whereby a 25 μm film was obtained. This film-forming was free of any problem such as breakage and the productivity was fine.
This film was subjected to an ultraviolet irradiation treatment for 3 min using an ultraviolet irradiation treatment apparatus with a germicide lamp (germicide lamp GL20-A manufactured by TOSHIBA CORPORATION) attached to an exposure machine (JEA2SS manufactured by NIHON DENSHI SEIKI CO., LTD.) to give the easy-to-tear stretched aliphatic polyester film of Example 1. The characteristics of the obtained film are shown in Table 3.

(Example (3)-2)

An easy-to-tear stretched aliphatic polyester film of Example 2 was obtained by a method similar to that in Example (3)-1 except that, in the method of Example (3)-1, 10 parts by weight of a copolymerized polyester polymer comprising succinic acid/butanediol/polycaprolactone was added relative to 100 parts by weight of the L-lactic acid-based copolymer. The evaluation results of the obtained film are shown in Table 3.

(Examples (3)-3 and (3)-4)

Easy-to-tear stretched aliphatic polyester films of Example (3)-3 and (3)-4 were obtained by a method similar to that in Example (3)-1 except that, in the method of Example (3)-1, the time of ultraviolet irradiation was set to 10 min. and 20 min., respectively. The evaluation results of the obtained films are shown in Table 3.

(Examples (3)-5 and (3)-6)

In the method of Example (3)-1, the stretched aliphatic polyester films obtained by the same method as used in Example (3)-1 were introduced into an electron beam irradiation device without ultraviolet irradiation, and an electron beam (15 and 20 Mrad, respectively) was irradiated at 200 KV, whereby the easy-to-tear stretched aliphatic polyester films of Examples (3)-5 and (3)-6 were obtained. The evaluation results of the obtained films are shown in Table 3.

(Comparative Example (3)-1)

In the method of Example (3)-1, the stretched aliphatic polyester film of Comparative Example 1 was obtained by a method similar to that in Example (3)-1 except that a copolymerized polyester polymer comprising succinic acid/butanediol/polycaprolactone was not added. The evaluation results of the obtained film are shown in Table 3.

(Comparative Example (3)-2)

In the method of Example (3)-1, the stretched aliphatic polyester film of Comparative Example (3)-2 was obtained by a method similar to that in Example (3)-1 except that the ultraviolet irradiation treatment was not applied. The evaluation results of the obtained film are shown in Table 3.

Table 3

| | Amount of elastomer added (parts by weight) | Kind and irradiation amount of actinic rays | Tear energy (gf·mm/$\mu$m) | Tear impact strength (j/mm$^2$) |
|---|---|---|---|---|
| Example (3)-1 | 15 | ultraviolet ray 3 min. | 2.5 | 1.2 |
| Example (3)-2 | 10 | ultraviolet ray 3 min. | 2.0 | 0.9 |
| Example (3)-3 | 15 | ultraviolet ray 10 min. | 2.0 | 1.1 |
| Example (3)-4 | 15 | ultraviolet ray 20 min. | 1.5 | 1.0 |
| Example (3)-5 | 15 | electron beam 15 Mrad | 2.5 | 1.3 |
| Example (3)-6 | 15 | electron beam 20 Mrad | 2.0 | 1.2 |
| Comparative Example (3)-1 | 0 | ultraviolet ray 3 min. | 2.0 | 0.3 |
| Comparative Example (3)-2 | 15 | no | 7.0 | 1.8 |

(Example (4)-1)

An L-lactic acid-based copolymer having a melting point of 175°C and a weight average molecular weight of 170000 was melted in a twin-screw extruder (screw diameter =35 mm$\phi$, L/D=45: TEM manufactured by TOSHIBA MACHINE CO., LTD.) and extruded form a T-die at 200°C to give a non-stretched film.

The non-stretched film was first stretched 3.4 times in the longitudinal direction at 75°C by a roll stretching machine and then 5.5 times in the transverse direction at 85°C by a tenter stretching machine, after which it was subjected to a heat-set treatment at 155°C and a 3% relaxation treatment in a temperature descending process, whereby a 25 $\mu$m substrate film was obtained.

On the other hand, a blend of polycaprolactone (10 parts by weight) added to an L-lactic acid-based copolymer (100 parts by weight) having a melting point of 150°C and a weight average molecular weight of 150000 was extruded under the same conditions as mentioned above, and extrusion-laminated on the substrate film obtained by the aforementioned method to a thickness of 50 $\mu$m to form a heat seal layer of an aliphatic polyester resin. The obtained laminate was introduced into a three-side sealing machine to prepare a three-side-sealed packaging bag.

The packaging bag obtained by the above-mentioned method was introduced into an electron beam irradiation device, and an electron beam (15 Mrad) was irradiated at an accelerating voltage of 350 KV, whereby an easy-to-cut packaging bag was obtained. The easy-to-cut property evaluation results of the obtained packaging bag are shown in Table 4. The packaging bag obtained in this Example was superior in easy-to-cut property. In addition, the bag showed biodegradability, was of an environment corresponding type, and was highly practical as a packaging bag.

(Examples (4)-2 and (4)-3)

Easy-to-cut packaging bags of Examples (4)-2 and (4)-3 were obtained by a method similar to that in Example (4)-1 except that, in Example (4)-1, the irradiation energy of electron beam irradiation was 10 and 20 Mrad, respectively. The easy-to-cut property evaluation results of the obtained packaging bags are shown in Table 4. The packaging bags obtained in these Examples showed high practicality as did the packaging bag obtained in Example (4)-1.

(Example (4)-4)

An easy-to-cut packaging bag of Example (4)-4 was obtained by a method similar to that in Example 1 except that, in Example (4)-1, the electron beam irradiation was not applied and an ultraviolet irradiation treatment was applied instead for 3 min using an ultraviolet irradiation treatment apparatus with a germicide lamp (germicide lamp GL20-A, manufactured by TOSHIBA CORPORATION) attached to an exposure machine (JEA2SS manufactured by NIHON DENSHI SEIKI CO., LTD.). The easy-to-cut property evaluation results of the obtained packaging bag are shown in Table 4. The packaging bag obtained in this Example showed high practicality as did the packaging bag obtained in Example (4)-1.

(Examples (4)-5 and (4)-6)

Easy-to-cut packaging bags of Examples (4)-5 and (4)-6 were obtained by a method similar to that in Example (4)-4 except that, in Example (4)-4, the time of the ultraviolet irradiation treatment was 10 and 20 min., respectively. The easy-to-cut property evaluation results of the obtained packaging bags are shown in Table 4. The packaging bags obtained in these Examples showed high practicality as did the packaging bag obtained in Example (4)-4.

(Comparative Example (4)-1)

A packaging bag of Comparative Example (4)-1 was obtained by a method similar to that in Example (4)-1 except that, in Example (4)-1, the electron beam irradiation was not applied. The easy-to-cut property evaluation results of the obtained packaging bag are shown in Table 4. The packaging bag obtained in this Comparative Example is superior in that it has biodegradability and is of an environment corresponding type, but it has poor easy-to-cut property and of little practical use as a packaging bag requiring tearing-by-hand performance.

Table 4

| | electron beam irradiation energy (Mrad) | UV irradiation time (min.) | easy-to-cut property |
|---|---|---|---|
| Example (4)-1 | 15 | - | ⊙ |
| Example (4)-2 | 10 | - | ○ |
| Example (4)-3 | 20 | - | ⊙ |
| Example (4) -4 | - | 3 | ○ |
| Example (4)-5 | - | 10 | ⊙ |
| Example (4)-6 | - | 20 | ⊙ |
| Comparative Example (4)-1 | - | - | × |

(Example (5)-1)

An L-lactic acid-based copolymer having a melting point of 175°C and a weight average molecular weight of 170000 was melted in a twin-screw extruder (screw diameter =35 mmφ, L/D=45: TEM manufactured by TOSHIBA MACHINE CO., LTD.) and extruded form a T-die at 200°C to give a non-stretched film.
The non-stretched film was first stretched 3.4 times in the longitudinal direction at 75°C by a roll stretching machine and then 5.5 times in the transverse direction at 85°C by a tenter stretching machine, after which it was subjected to a heat-set treatment at 155°C and a 3% relaxation treatment in a temperature descending process, whereby a 25 μm substrate film was obtained.
On the other hand, a blend of polycaprolactone (10 parts by weight) added to an L-lactic acid-based copolymer (100 parts by weight) having a melting point of 150°C and a weight average molecular weight of 150000 was extruded under the same conditions as mentioned above, and extrusion-laminated on the substrate film obtained by the aforementioned method to a thickness of 50 μm to form a heat seal layer of an aliphatic polyester resin.
The laminate obtained by the above-mentioned method was introduced into an electron beam irradiation device, and an electron beam (15 Mrad) was irradiated at an accelerating voltage of 350 KV. The electron beam-irradiated laminate produced by said method was introduced into a three-side sealing machine to prepare a three-side-sealed packaging bag. The easy-to-cut property evaluation results of the obtained packaging bag are shown in Table 5. The packaging bag obtained in this Example was superior in easy-to-cut property. In addition, the bag showed biodegradability, was of an environment corresponding type, and was highly practical as a packaging bag.

(Examples (5)-2 and (5)-3)

Easy-to-cut packaging bags of Examples (5)-2 and (5)-3 were obtained by a method similar to that in Example (5)-1 except that, in Example (5)-1, the irradiation energy of electron beam irradiation was 10 and 20 Mrad, respectively. The easy-to-cut property evaluation results of the obtained packaging bags are shown in Table 5. The packaging bags obtained in these Examples showed high practicality as did the packaging bag obtained in Example (5)-1.

(Example (5)-4)

An easy-to-cut packaging bag of Example (5)-4 was obtained by a method similar to that in Example 1 except that, in Example (5)-1, the electron beam irradiation was not applied and an ultraviolet irradiation treatment was applied instead for 3 min using an ultraviolet irradiation treatment apparatus with a germicide lamp (germicide lamp GL20-A, manufactured by TOSHIBA CORPORATION) attached to an exposure machine (JEA2SS manufactured by NIHON DENSHI SEIKI CO., LTD.). The easy-to-cut property evaluation results of the obtained packaging bag are shown in Table 5. The packaging bag obtained in this Example showed high practicality as did the packaging bag obtained in Example (5)-1.

(Examples (5)-5 and (5)-6)

Easy-to-cut packaging bags of Examples (5)-5 and (5)-6 were obtained by a method similar to that in Example (5)-4 except that, in Example (5)-4, the time of the ultraviolet irradiation treatment was 10 and 20 min., respectively. The easy-to-cut property evaluation results of the obtained packaging bags are shown in Table 5. The packaging bags obtained in these Examples showed high practicality as did the packaging bag obtained in Example (5)-4.

(Comparative Example (5)-1)

A packaging bag of Comparative Example (5)-1 was obtained by a method similar to that in Example (5)-1 except that, in Example (5)-1, the electron beam irradiation was not applied. The easy-to-cut property evaluation results of the obtained packaging bag are shown in Table 5. The packaging bag obtained in this Comparative Example is superior in that it has biodegradability and is of an environment corresponding type, but it has poor easy-to-cut property and of little practical use as a packaging bag requiring easy-to-cut performance.

Table 5

| | electron beam irradiation energy (Mrad) | UV irradiation time (min.) | easy-to-cut property |
|---|---|---|---|
| Example 1 | 15 | - | ⊙ |
| Example 2 | 10 | - | ○ |
| Example 3 | 20 | - | ⊙ |
| Example 4 | - | 3 | ○ |
| Example 5 | - | 10 | ⊙ |
| Example 6 | - | 20 | ⊙ |
| Comparative Example 1 | - | - | × |

(Example (6)-1)

As a starting material for lactic acid-based polyester resin layer (A), an L-lactic acid-based copolymer having a melting point of 145°C and a D-lactic acid ratio of 10% was used, and as a starting material for lactic acid-based polyester resin layer (B), an L-lactic acid-based copolymer having a melting point of 175°C and a D-lactic acid ratio of 1% was used. Both starting materials were melt-extruded using two different extruders, joined in a feed block, extruded from a T-die at 200˚C and rapidly cooled by a cooling drum to give a non-stretched laminate film having a (B/A/B) constitution and a thickness of 400 $\mu$m.

This non-stretched laminate film was first stretched 3.4 times in the longitudinal direction at 75˚C and then 5.5 times in the transverse direction at 85˚C, after which it was subjected to a heat treatment at 155˚C and a 3% relaxation treatment in a temperature descending process, whereby a 25 $\mu$m film was obtained. The thickness constitution ratio of respective layers of B/A/B of this film was 2/21/2.

The film obtained by the above film-forming step was easily cut in any direction in a functional test, and when the film was twisted, the twisted state was maintained. This film was free of any problem such as breakage during film-forming and slitting, and the productivity was fine.

(Example (6)-2)

A 25 $\mu$m film having a thickness constitution ratio of respective layers of B/A/B changed to 4/17/4 was obtained using the same starting materials and method as in Example (6)-1. This film showed a slightly resisting tearing-by-hand performance as compared to Example (6)-1 but twist fixability was fine.

(Comparative Example (6)-1)

Using the same starting materials and method as in Example (6)-1, a 25 $\mu$m film, wherein a thickness constitution ratio of respective layers of B/A/B was changed to 10/5/10, was obtained. The thus-obtained film did not have fine tearability and restored the original state in a twist test, thus failing to achieve twist fixability.

(Comparative Example (6)-2)

A 25 $\mu$m film was obtained using the same starting materials and method as in Example (6)-1 except that the temperature of the heat treatment alone was changed to 130˚C. The thus-obtained film did not have fine tearability and restored the original state in a twist test, thus failing to achieve twist fixability.

(Comparative Example (6)-3)

Using the same method, conditions and thickness ratio as in Example (6)-1 except that an L-lactic acid-based copolymer having a melting point of 169˚C and a D-lactic acid ratio of 1.2% was used as a starting material for lactic acid-based polyester resin layer (A), a 25 $\mu$m film was obtained. This film did not have easy-to-tear property and restored the original state in a twist test, thus failing to achieve twist fixability.

The evaluation results of the films obtained in Examples (6)-1, (6)-2 and Comparative Examples (6)-1 to (6)-3 are shown in Table 6.

Table 6

|  |  | Ex. (6)-1 | Ex. (6)-2 | Comp. Ex. (6)-1 | Comp. Ex. (6)-2 | Comp. Ex. (6)-3 |
|---|---|---|---|---|---|---|
| film thickness | $\mu$m | 25 | 25 | 25 | 25 | 25 |
| layer A thickness | $\mu$m | 21 | 17 | 5 | 21 | 5 |
| layer B ratio | % | 16 | 32 | 80 | 16 | 80 |
| layer A resin melting point | ˚C | 145 | 145 | 145 | 145 | 169 |
| layer B resin melting point | ˚C | 175 | 175 | 175 | 175 | 175 |
| heat treatment temperature | ˚C | 155 | 155 | 155 | 130 | 155 |
| edge tear strength | N | 5 | 10 | 34 | 31 | 55 |
| easy-to-tear property | - | ⊙ | ○ | × | × | × |
| twist fixability | - | ○ | ○ | × | × | × |

**Industrial Applicability**

The stretched aliphatic polyester film obtained by the present invention is an environment corresponding type biodegradable film having easy-to-tear property, twist fixability and transparency, that are the characteristics of a cellophane film, as well as heat resistance, aroma retention and toughness, that an aliphatic polyester film has, in combination. Therefore, it is preferable as a packaging material for food, pharmaceutical products, electronic parts and the like, or a material of adhesive tapes.

In addition, the stretched aliphatic polyester film obtained by the present invention (3) has the characteristics of a cellophane film having both antinomic characteristics of superior easy-to-tear property and superior tensile impact property, and therefore, it is preferable as a packaging material of food, pharmaceutical products, electronic parts and the like, or a material of adhesive tapes.

Moreover, since a packaging bag made of the aliphatic polyester film of the present invention (5) or (6) is superior in easy-to-cut property and is an environment corresponding type biodegradable film having heat resistance, aroma retention and toughness, that an aliphatic polyester film has, in combination, it is preferable as a packaging bag for food, pharmaceutical products, electronic parts and the like.

**Claims**

1. An easy-to-tear stretched aliphatic polyester film having an edge tear strength in the longitudinal direction and the transverse direction of 2 to 22 N, which is produced by irradiation of actinic rays on a stretched aliphatic polyester film.

2. The easy-to-tear stretched aliphatic polyester film of claim 1, having a molecular absorption coefficient at a wavelength of 205 nm of not less than 1500.

3. An easy-to-tear stretched aliphatic polyester film having a tear energy of 0.2-5 gf·mm/$\mu$m, and a tensile impact strength of not less than 0.5 j/mm$^2$ which is produced by irradiation of actinic rays on a stretched aliphatic polyester film.

4. The easy-to-tear stretched aliphatic polyester film of any one of claims 1 to 3, wherein a main component of the stretched aliphatic polyester film is a lactic acid-based polyester resin.

5. An easy-to-cut packaging bag produced using a film obtained by irradiation of actinic rays on an aliphatic polyester film.

6. An easy-to-cut packaging bag obtained by irradiation of actinic rays on a packaging bag produced using an aliphatic polyester film.

7. The easy-to-cut bag of any one of claims 5 and 6, wherein a main component of the stretched aliphatic polyester film is a lactic acid-based polyester resin.

8. A production method of an easy-to-tear lactic acid-based polyester film having an edge tear strength in the longitudinal direction and the transverse direction of 2-22 N, which method comprises

   stretching, in at least a monoaxial direction, a non-stretched laminate film comprising a lactic acid-based polyester resin layer (A) having a melting point: $Tm_A$ and a resin (B) having a melting point: $Tm_B$, which satisfies $Tm_B \geq Tm_A + 10°C$, relative to $Tm_A$, said resin (B) being laminated on at least one surface of layer (A) in a thickness of 5-60% of the thickness of a whole film, and then performing a heat treatment at a temperature Ts satisfying $Tm_A - 10°C \leq Ts < Tm_B + 10°C$.

**Patentansprüche**

1. Leicht zu zerreißende gestreckte Folie aus aliphatischem Polyester mit einer Randreißfestigkeit in Längsrichtung und Querrichtung von 2 bis 22 N, die durch Bestrahlung einer gestreckten Folie aus aliphatischem Polyester mit aktinischer Strahlung hergestellt wird.

2. Leicht zu zerreißende gestreckte Folie aus aliphatischem Polyester gemäß Anspruch 1, die einen molekularen Absorptionskoeffizienten bei einer Wellenlänge von 205 nm von nicht weniger als 1500 aufweist.

**3.** Leicht zu zerreißende gestreckte Folie aus aliphatischem Polyester mit einer Reißenergie von 0,2 bis 5 gf·mm/$\mu$m und einer Schlagzugzähigkeit von nicht weniger als 0,5 J/mm$^2$, die durch Bestrahlung einer gestreckten Folie aus aliphatischem Polyester mit aktinischer Strahlung hergestellt wird.

**4.** Leicht zu zerreißende gestreckte Folie aus aliphatischem Polyester gemäß einem der Ansprüche 1 bis 3, wobei eine Hauptkomponente der gestreckten Folie aus aliphatischem Polyester ein Polyesterharz auf Milchsäurebasis ist.

**5.** Leicht zu schneidender Verpackungsbeutel, der unter Verwendung einer Folie hergestellt wird, die durch Bestrahlung einer Folie aus aliphatischem Polyester mit aktinischer Strahlung hergestellt wird.

**6.** Leicht zu schneidender Verpackungsbeutel, der durch Bestrahlung eines Verpackungsbeutels, der unter Verwendung einer Folie aus aliphatischem Polyester hergestellt wird, mit aktinischer Strahlung erhalten wird.

**7.** Leicht zu schneidender Beutel gemäß einem der Ansprüche 5 und 6, wobei eine Hauptkomponente der gestreckten Folie aus aliphatischem Polyester ein Polyesterharz auf Milchsäurebasis ist.

**8.** Herstellungsverfahren für eine leicht zu zerreißende Polyesterfolie auf Milchsäurebasis mit einer Randreißfestigkeit in Längsrichtung und Querrichtung von 2 bis 22 N, wobei das Verfahren Folgendes umfasst:

Strecken einer ungestreckten Laminatfolie in wenigstens einer monoaxialen Richtung, wobei die Folie eine Schicht (A) aus einem Polyesterharz auf Milchsäurebasis mit einem Schmelzpunkt $Tm_A$ und ein Harz (B) mit einem Schmelzpunkt $Tm_B$, der bezogen auf $Tm_A$ der Bedingung $Tm_B \geq Tm_A + 10°C$ genügt, umfasst, wobei das Harz (B) in einer Dicke von 5 bis 60% der Dicke einer ganzen Folie auf wenigstens eine Oberfläche der Schicht (A) laminiert ist; und dann
Durchführen einer Wärmebehandlung bei einer Temperatur Ts, die der Bedingung $Tm_A - 10 °C \leq Ts < Tm_B + 10 °C$ genügt.

## Revendications

**1.** Film à base de polyester aliphatique étiré et se déchirant facilement ayant une résistance à la torsion de l'arrête dans le sens longitudinal et le sens transversal de 2 à 22 N, qui est produit par l'irradiation de rayons actiniques sur un film à base de polyester aliphatique étiré.

**2.** Film à base de polyester aliphatique étiré et se déchirant facilement selon la revendication 1, ayant un coefficient d'absorption moléculaire à une longueur d'onde de 205 nm de pas moins de 1500.

**3.** Film à base de polyester aliphatique étiré et se déchirant facilement ayant une énergie de torsion de 0,2 à 5 gf.mm/$\mu$m, et une résistance à l'impact de tension de pas moins de 0,5 j/mm$^2$, qui est produit par l'irradiation de rayons actiniques sur un film à base de polyester aliphatique étiré.

**4.** Film à base de polyester aliphatique étiré et se déchirant facilement selon l'une quelconque des revendications 1 à 3, dans lequel un composant principal du film à base de polyester aliphatique étiré est une résine de polyester à base d'acide lactique.

**5.** Emballage se découpant facilement produit en utilisant un film obtenu par l'irradiation de rayons actiniques sur un film à base de polyester aliphatique.

**6.** Emballage se découpant facilement obtenu par l'irradiation de rayons actiniques sur un emballage produit en utilisant un film à base de polyester aliphatique.

**7.** Emballage se découpant facilement selon l'une quelconque des revendications 5 et 6, dans lequel un composant principal du film à base de polyester aliphatique étiré est une résine de polyester à base d'acide lactique.

**8.** Procédé de production d'un film de polyester à base d'acide lactique se déchirant facilement ayant une résistance à la torsion d'arrête dans le sens longitudinal et le sens transversal de 2 à 22 N, lequel procédé comprend

l'élongation, dans au moins un sens monoaxial, d'un film stratifié non étiré comprenant une couche de résine de polyester à base d'acide lactique (A) ayant un point de fusion : $Tm_A$ et une résine (B) ayant un point de fusion : $Tm_B$, qui satisfait l'équation $Tm_B \geq Tm_A + 10°\,C$, par rapport à $Tm_A$, ladite résine (B) étant stratifiée sur au moins une surface de la couche (A) avec une épaisseur de 5 à 60 % de l'épaisseur de tout le film, puis le traitement thermique à une température Ts satisfaisant $Tm_A - 10°\,C \leq Ts \leq Tm_B + 10°\,C$.

# FIG. 1

# FIG. 2

**EP 1 471 095 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55008551 B
- JP 56050692 B
- JP 55020514 B
- JP 5104618 A
- JP 5033809 A
- JP 2000025835 A
- JP 2002240209 A
- JP 2001191407 A
- EP 1038906 A
- EP 0776927 A
- JP 2000086749 A
- JP 2000086877 A
- WO 9812250 A